Europäisches Patentamt

European Patent Office

Office européen des brevets

(11) Numéro de publication: **0 397 580**
**A1**

## (12) DEMANDE DE BREVET EUROPEEN

(21) Numéro de dépôt: 90401263.0

(22) Date de dépôt: 11.05.90

(51) Int. Cl.5: **B65B 53/02, B29C 63/42**

(30) Priorité: 11.05.89 FR 8906181

(43) Date de publication de la demande:
14.11.90 Bulletin 90/46

(84) Etats contractants désignés:
AT BE CH DE DK ES FR GB GR IT LI LU NL SE

(71) Demandeur: SLEEVER INTERNATIONAL
COMPANY
15, avenue Arago

F-91420 Morangis(FR)

(72) Inventeur: **Fresnel, Jacques**
**15 Boulevard Lannes**
**F-75016 Paris(FR)**

(74) Mandataire: **Martin, Jean-Jacques et al**
**Cabinet REGIMBEAU 26, Avenue Kléber**
**F-75116 Paris(FR)**

(54) **Procédé pour appliquer, par retraction, un manchon thermorétractable sur un objet à revetir, et appareil pour la mise en oeuvre du procédé.**

(57) L'invention concerne l'application, par rétraction, d'un manchon thermorétractable sur un objet à revêtir, dans lequel l'objet convoyé dans un four-tunnel est équipé de moyens de chauffage.

Selon un aspect fondamental de l'invention, l'objet (1) muni de son manchon (2) est saisi par des moyens de préhension (3) pour être basculé dans une position essentiellement horizontale, c'est-à-dire sensiblement parallèlement à la direction de convoyage : de cette façon, la rétraction est effectuée dans cette position, progressivement de l'avant vers l'arrière et de façon parfaitement homogène. Les moyens de préhension (3) assurent alors seuls le convoyage de l'objet avec son manchon dans le four-tunnel (100).

Application notamment à la décoration d'objets ou à la protection d'objets contre l'inviolabilité, lesdits objets pouvant être de formes très diverses.

FIG.1

La présente invention a trait au domaine de la décoration et/ou protection d'objets, plus particulièrement des emballages ou contenants divers, par des tronçons de gaine ou manchons en matière plastique thermorétractable, généralement imprimés et qui, soumis à un apport calorifique, épousent par rétraction la forme de l'objet.

Elle concerne plus particulièrement des perfectionnements apportés aux techniques dans lesquelles le manchon, enfilé de façon lâche sur l'objet à décorer et/ou protéger, est chauffé à une température supérieure à celle du ramollissement du film constitutif du manchon pour sa rétraction sur ledit objet.

Il est aujourd'hui bien connu d'utiliser certains films plastiques, de les imprimer ou non, et de les former en tube en scellant les deux bords rabattus l'un sur l'autre de la bande, afin de pouvoir décorer et/ou protéger un objet, ou plus particulièrement l'emballage d'un produit.

C'est ainsi que l'on munit de plus en plus des récipients tels que bouteilles, bombes, aérosols, flacons, boîtes de conserves et autres objets d'emballage, d'un manchon ou fourreau protecteur, ou encore d'une bague d'inviolabilité, en matière plastique thermorétractable. Ce manchon est disposé autour du récipient et, après chauffage extérieur à une température supérieure à celle du ramollissement, il doit épouser avec le minimum de déformation le contour du récipient (voir par exemple le Brevet Français N° 2 346 129 et le Brevet Allemand N° 26 10 051). Pour réaliser de tels fourreaux rétractables, on utilise des films plastiques (généralement en chlorure de polyvinyle) auxquels une mémoire est conférée lors de leur fabrication, et en général qualifiés de rétractables. Ces films sont en général étirés essentiellement dans le sens du périmètre des objets à revêtir, de façon à ce qu'ils acquièrent une mémoire dans la direction d'étirage (ou pourcentage de rétraction) pouvant aller jusqu'à 70 % (en fait les films couramment utilisés possèdent un pourcentage compris entre 50 et 60 %) ; la mémoire dans le sens longitudinal, c'est-à-dire celui correspondant à la hauteur du tronçon de gaine n'est quant à elle que de l'ordre de 3 à 7 %.

On sait en effet que pour conférer une mémoire à un film de matière plastique (en chlorure de polyvinyle, polystyrène ou polyester par exemple), celui-ci doit être chauffé à une température très précise, choisie généralement inférieure au point de transition vitreux de la matière plastique délimitant la zone amorphe et la zone élastique, tandis qu'on le soumet à une traction transversale et/ou longitudinale. En chauffant le film, on provoque son ramollissement, autorisant le fluage des molécules et permettant ainsi d'augmenter les dimensions initiales du film, mais en contrepartie avec une réduction de l'épaisseur initiale dudit film.

De tels films, qui généralement sont imprimés et/ou décorés pour servir d'étiquettes sur l'objet à revêtir, sont dits "mono-orientés" ou "à mono-orientation prépondérante". Si l'on utilise des films en chlorure de polyvinyle cristal, l'impression peut être réalisée à l'envers, d'où un brillant extérieur allié à une protection de l'impression contre les risques d'effacement. Outre l'aspect décoration, il peut être question de protection, non seulement pour l'inviolabilité d'un contenant, mais aussi comme barrière, par exemple pour réduire les pertes de parfum avec un emballage en polypropylène, ou des pertes de gaz carbonique pour les boissons gazeuses dans des emballages en téréphtalate de polypropylène.

Une telle application a trouvé un large débouché dans la vente des produits offerts au grand public, car elle permet notamment une grande richesse de décoration, avec reproduction éventuelle de clichés photographiques, et une utilisation pour des objets de contours très variés.

Si les techniques de fabrication des films rétractables, leur impression et leur mise en tube, ainsi que la pose des manchons autour des objets ou emballages de forme allongée sont aujourd'hui pratiquement maîtrisées, il n'en va pas de même pour l'opération de rétraction desdits manchons, et ce d'autant plus que l'objet ou l'emballage présente une section irrégulière de forme triangulaire, carrée ou rectangulaire, avec des faces présentant des zones convexes et/ou concaves.

Il est en effet impératif que la rétraction s'effectue de manière uniforme autour de l'objet ou de l'emballage, c'est-à-dire sans pli, ni frisure, ni cratère de la gaine, et sans déformation des impressions réalisées sur le film, ce qui, outre l'aspect purement esthétique a également un effet sur l'utilisation directe (lecture des codes Barres, mentions légales, ou notices d'emploi par exemple).

Les difficultés rencontrées pour maîtriser l'opération de rétraction proviennent en grande partie de problèmes d'ordre essentiellement thermique, car la température à laquelle le film est chauffé doit alors être à la fois précise, constante, et homogène sur toute la surface dudit film, et en outre aussi basse que possible.

La température doit tout d'abord être précise.

En effet, il faut savoir que quelques degrés seulement séparent la zone élastique de la zone amorphe, et que chaque film plastique possède, selon sa nature et sa formulation, son propre point de ramollissement et sa température de séparation entre la zone élastique et la zone amorphe. La connaissance de la température correspondant au début de la zone amorphe est d'une importance primordiale pour opérer la rétraction d'un film, car le film restitue sa mémoire tant que sa température reste inférieure à celle du début de la zone amorphe, la mémoire acquise dans la zone élastique étant au moins partiellement perdue si cette température est dépassée.

A titre d'exemple, un film dont le début de la zone amorphe se situe à 110° C et possédant une mémoire lui conférant une capacité de rétraction de 50 %, ne pourra pas restituer ce pourcentage si la température de 110° C est dépassée. Il ne serait donc pas possible dans un tel cas, pour un objet dont la forme nécessite du fait de sa section de disposer de 50 % de taux de rétraction, de conformer le film sur l'objet de façon satisfaisante. De nombreux types d'objets seraient donc ainsi exclus de la possibilité de pouvoir être revêtus d'un manchon thermorétracté.

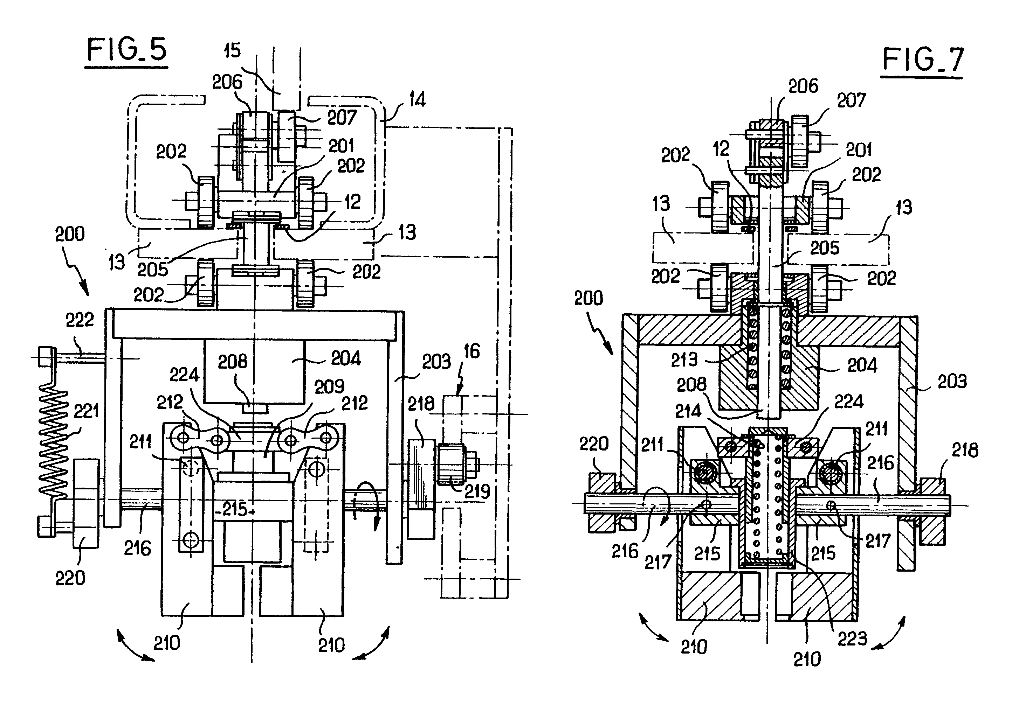

La température doit ensuite être constante, car il est aisé, pour le spécialiste qui connaît les courbes de rétraction d'un film en fonction de la température (voir figure 4, les courbes RL de rétraction longitudinale et RT de rétraction transversale correspondantes), de comprendre qu'à un instant donné, si le film est soumis à une température de 80° C, il est possible d'obtenir un pourcentage de rétreint qui est aux environs de 32 % dans le sens transversal, mais que si à un autre instant la température n'est plus que de 75° C, la partie du film qui aura été soumise à cette température ne pourra subir qu'un pourcentage de rétreint de 20 %, dans le sens transversal : une telle différence au niveau du pourcentage de rétreint (ou taux de rétraction) pour un si faible écart de température montre bien la nécessité d'avoir une température constante.

Cette température doit aussi être homogène sur toute la surface du film.

En effet, conformément à la courbe de rétraction précitée, et dans le cas d'un objet à section simple et droite, si on réalise simultanément en deux points du film les conditions des points précités (sur la courbe RT de figure 4, le point A 80° C ; 32 % d'une part, et le point B 75° C ; 20 % d'autre part), la rétraction ne sera pas du même pourcentage aux deux points du film, et on constatera alors une distorsion ou déformation de l'impression.

Il faut aussi signaler qu'en dépit d'une homogénéité de température également constante, on peut enregistrer une perte de calories au niveau du film, consécutive au fait que le film, dans le cas d'un objet à forme concave, pourra être partiellement appliqué sur la surface dudit objet et partiellement être dans le vide. Par son contact avec la surface de l'objet, les calories reçues par le film seront transférées à l'objet lui-même, provoquant alors les conséquences qui ont été signalées pour les points A et B précités.

Cette température doit enfin être aussi basse que possible.

En effet, la forte mono-orientation du film permet de libérer par exemple 50 % de rétraction transversale pour seulement 7 à 8 % de rétraction longitudinale. Par contre, si la température à laquelle le film est chauffé venait à excéder notablement celle qui permet de libérer 50 % de rétraction transversale, outre le fait que l'on ne pourrait pas obtenir ces 50 %, on augmenterait le pourcentage de rétraction longitudinale. Le rapport rétraction transversale sur rétraction longitudinale augmenterait alors, pour atteindre une valeur se traduisant par une déformation incontrôlée de l'impression, puisqu'un point du décor se déplacerait en même temps sur un axe vertical et un axe horizontal, sa position devenant alors totalement aléatoire. Dans ces conditions, on ne peut amplifier le décor dans les deux directions lors de son impression pour tenir compte de la rétraction du film.

Les considérations ci-dessus montrent qu'il est en réalité essentiel de pouvoir contrôler la température avec une grande précision dans le four-tunnel utilisé.

Pour tenter de résoudre certaines des difficultés rappelées ci-dessus, divers moyens ont été préconisés, comme par exemple : l'utilisation de fours-tunnels à zones multiples de préchauffage-rétreint avec des tubes flexibles de soufflage d'air (Brevet Européen N° 0 058 602), ou encore la réalisation de plis rentrants en contact avec la surface des objets sur le périmètre du manchon à rétreindre. On peut citer aussi le Brevet Français N° 2 328 614.

Plus récemment, la demanderesse a proposé d'insuffler un fluide gazeux entre l'objet et le manchon lâche à rétreindre pour gonfler le manchon et le maintenir hors de contact avec l'objet à revêtir, la température du fluide gazeux étant choisie nettement inférieure à celle du ramollissement du film constitutif du manchon, ce qui permet d'équilibrer progressivement les températures des faces intérieure et extérieure du manchon, et de contrôler le gradient thermique dans le film pour réaliser le contact film-objet à l'instant désiré (voir à cet effet le Brevet Français N° 2 588 828).

Cette solution est intéressante, mais ne résoud pas le problème du contrôle de la température dans le four-tunnel, dans la zone concernée par les moyens d'insufflage du fluide gazeux.

Or ce contrôle de température est crucial pour parvenir à réaliser effectivement la rétraction du manchon en portant en même temps les faces intérieure et extérieure dudit manchon à une même température prédéterminée, qui est précisément celle correspondant à la séparation entre la zone élastique et la zone amorphe du film.

Un tel contrôle dans les fours-tunnels est très délicat à réaliser en raison des nombreuses perturbations extérieures bousculant en permanence le niveau thermique de l'environnement dans la zone concernée par les moyens d'insufflage.

Il est en effet aisé d'insuffler un fluide gazeux à une température constante prédéterminée, mais il est par contre pratiquement impossible de figer la température dans une zone donnée du four-tunnel, notamment en se calant sur une température correspondant à celle choisie pour la rétraction d'un manchon.

Or les spécialistes doivent inévitablement faire face à des perturbations extérieures qui sont d'origine variées. L'intérieur du four-tunnel est en effet soumis sur sa longueur à des courants de convexion qui déplacent en permanence les zones de températures (courants dus notamment à la température et au nombre des objets passant dans le four-tunnel et/ou à un appel d'air dans ledit four-tunnel). Il faut également mentionner l'inertie thermique du système de rétraction et celle du système de convoyage des objets.

En dépit des nombreuses tentatives qui ont été faites pour tenter de s'affranchir le mieux possible des perturbations extérieures, les spécialistes butent de toute façon sur une difficulté résultant des différences de densité entre l'air chaud et froid, le premier ayant toujours tendance à se situer au niveau supérieur du four-tunnel, et le second dans la partie inférieure.

Ces différences de densité, pratiquement impossibles à éviter, induisent des différences appréciables entre la température régnant au niveau du convoyeur et celle régnant au sommet du four-tunnel : on a ainsi constaté, pour un four-tunnel présentant une hauteur de 300 mm, des différences de températures de 7 à 12° C, ce qui est en réalité très sensible au niveau de la rétraction transversale du manchon, ainsi que cela a été expliqué plus haut.

De ce fait, tout objet ou emballage circulant à l'intérieur du four-tunnel, est ainsi soumis, de sa base à son sommet, à des différences de températures d'autant plus importantes que sa hauteur est grande, et ne peut notamment pas être soumis en tous points à une température identique, condition d'une rétraction homogène : il est dès lors très difficile d'éviter que la partie supérieure du manchon ne se rétracte avant la partie inférieure, même si l'on utilise un insufflage d'air selon un flux de direction générale verticale, ce qui provoque un emprisonnement d'air à l'intérieur du manchon, lequel doit être évacué dans un sens alors anti-naturel.

Ces différences de densité sont accentuées entre l'entrée et la sortie du four-tunnel, du fait des courants de convexion qui déterminent à l'intérieur du four-tunnel une température qui va en augmentant de l'entrée à la sortie. Un des facteurs intervenant ici est principalement l'inertie thermique des emballages, lesquels abaissent la température du four-tunnel lorsqu'ils y pénètrent pour se réchauffer progressivement au fur et à mesure de leur avancée dans celui-ci.

De ce fait, la face avant du manchon, qui est la première exposée, subit un effet de rétraction plus prononcée que la face arrière dudit manchon : on constate qu'il s'en suit généralement une déformation de l'impression au niveau de la face avant.

Ces deux inconvénients résultant de différences de densités de l'air sont encore plus sensibles dans le cas d'objets présentant une section à courbe concave sur une partie de leur hauteur ou d'objets pour lesquels on recherche un rabat de recouvrement sur le dessous et/ou sur le dessus desdits objets.

En effet, dans le cas d'objets présentant une section intermédiaire à courbe concave, on ne parvient pas à éviter d'emprisonner de l'air dans la partie concave, et cet air emprisonné interdit souvent une bonne rétraction sur la partie concave (en se rétractant, le film constitutif du manchon est d'abord en contact avec les parties convexes de l'objet), de sorte que le film présente alors un aspect frippé que l'on doit chercher à supprimer par un surchauffage final important pour lisser le film.

Dans le cas d'objets pour lesquels on cherche à réaliser un ou deux rabats de recouvrement par la rétraction du manchon associé, tels que des piles électriques par exemple, on doit en général se limiter à un rabat en partie supérieure des objets, car le dessous desdits objets reposant sur le convoyeur est de facto inaccessible.

On a certes tenté, pour pallier la différence de température due aux densités variables de l'air, de coucher l'objet sur le convoyeur ou mieux sur deux rouleaux horizontaux. Cette façon de faire peut permettre de plus de réaliser deux rabats. Cette solution est cependant peu satisfaisante, car la face du manchon en contact avec le convoyeur ou en contact d'appui sur les rouleaux est alors tendue sur l'objet. De ce fait, l'excès de film est renvoyé sur la face opposée qui subit une rétraction plus importante, ce qui provoque une déformation de l'impression. De plus, le convoyeur de par son inertie thermique représente une zone à température non contrôlée et insuffisante pour rétracter la face du film qui est en contact avec lui. En tout état de cause, le fait de coucher un emballage comme indiqué ci-dessus ne peut être envisagé avec des emballages ronds, coniques, ou à forme convexe et/ou concave.

Finalement, les spécialistes de ce domaine constatent un besoin réel d'une technique permettant d'effectuer la rétraction d'un manchon dans des conditions optimales sur des objets de formes très diverses.

L'invention a pour objet de proposer un procédé et un dispositif de mise en oeuvre qui permettent d'assurer une rétraction parfaitement homogène pour un manchon thermorétractable, sans déformation des impressions, ni formation de plis, frisures ou cratères, et ce quelles que soient la forme et la dimension de l'objet à décorer et/ou protéger.

Subsidiairement, un autre objet de l'invention est de pouvoir opérer cette rétraction contrôlée sous des températures moyennes à la surface du film, par exemple 100°C, ce qui évite les nombreux inconvénients précités des rétractions aléatoires sous des températures atteignant classiquement 180 à 250°C, et de plus réduit la consommation d'énergie ainsi que la longueur du four-tunnel de rétraction utilisé.

Il s'agit plus particulièrement d'un procédé pour appliquer, par rétraction, un manchon thermorétractable sur un objet à revêtir, procédé dans lequel l'objet sur lequel un manchon a été enfilé de façon lâche est convoyé dans un four-tunnel ouvert à ses deux extrémités et équipé de moyens de chauffage organisés le long de ses parois latérales, caractérisé par le fait que l'objet muni de son manchon est saisi par des moyens de préhension pour être basculé dans une position essentiellement horizontale, c'est-à-dire sensiblement parallèlement à la direction de convoyage, de façon que la rétraction dudit manchon sur ledit objet soit effectuée dans cette position, progressivement de l'avant vers l'arrière, lesdits moyens de préhension assurant alors seuls le convoyage de l'objet avec son manchon dans le four-tunnel.

De préférence, l'objet est basculé avant son entrée dans le four-tunnel, de façon à passer dans la totalité dudit four-tunnel en position essentiellement horizontale, et/ou à nouveau basculé dans une position essentiellement verticale à la sortie du four-tunnel, afin d'être convoyé par des moyens de convoyage traditionnels après relâchement des moyens de préhension.

Lorsque l'objet est un emballage présentant un goulot, cet objet est avantageusement saisi par son goulot avant d'être basculé dans une position essentiellement horizontale. Dans le cas d'un emballage présentant un fond dont la forme permet une prise extérieure ou intérieure, l'objet pourra alors être saisi par son fond avant d'être basculé dans une position essentiellement horizontale. Lorsque l'objet, après avoir été revêtu d'un manchon, circule sur un convoyeur dans une position horizontale (cas des crayons, ampoules pharmaceutiques, piles), il sera saisi par l'un des moyens de préhension, puis élevé à la hauteur désirée pour circuler dans une position horizontale à l'intérieur du four-tunnel.

Lorsque l'objet présente deux extrémités permettant une prise entre pointes, par exemple une pile électrique, l'objet sera en principe saisi par ses extrémités dans une position essentiellement horizontale, puis élevé à la hauteur désirée.

Pour certaines applications, l'objet sera de préférence basculé dans un plan vertical sensiblement parallèle à la direction de convoyage, dans un sens tel que les moyens de préhension soient disposés en avant ou en arrière dudit objet lorsque celui-ci est dans une position essentiellement horizontale. En variante, l'objet sera basculé dans un plan vertical sensiblement perpendiculaire à la direction de convoyage, de telle sorte que les moyens de préhension soient disposés latéralement par rapport audit objet lorsque celui-ci est dans une position essentiellement horizontale.

Avantageusement, après le basculement de l'objet, on insuffle un fluide gazeux entre l'objet et la manchon à rétreindre, pour gonfler le manchon et le maintenir hors de contact avec l'objet à revêtir, la température dudit fluide gazeux étant choisie pour réaliser, avant la rétraction proprement dite, un équilibrage progressif des températures des faces intérieure et extérieure dudit manchon au seuil de ramollissement du film constitutif ; en particulier, l'insufflage de fluide gazeux est effectué par les moyens de préhension, de façon à organiser un flux léchant l'objet au-delà desdits moyens de préhension.

L'invention concerne également un appareil pour la mise en oeuvre du procédé précité, comportant des moyens pour convoyer des objets munis d'un manchon dans un four-tunnel ouvert à ses deux extrémités et équipé de moyens de chauffage organisés le long de ses parois latérales : selon une caractéristique essentielle de l'invention, les moyens de convoyage dans le four-tunnel sont constitués par des moyens de préhension capables de saisir l'objet muni de son manchon, et de le faire basculer dans une position essentiellement horizontale, c'est-à-dire sensiblement parallèlement à la direction de convoyage.

De préférence, l'appareil comporte une succession d'organes de préhension organisée selon une chaîne continue.

Dans ce cas, la chaîne continue d'organes de préhension se déplace dans un plan sensiblement horizontal, avec un brin passant entre les parois latérales du four-tunnel, ce qui est par exemple adapté à la prise d'emballages par leur goulot. En variant, la chaîne continue d'organes de préhension se déplace dans un plan sensiblement vertical, avec un brin passant entre les parois latérales du four-tunnel, ce qui est par exemple adapté à la prise d'emballages par leur fond (cette prise pouvant d'ailleurs être intérieure ou extérieure).

Avantageusement, l'avancement de la chaîne continue d'organes de préhension est synchronisé avec l'avancement de moyens de convoyage traditionnels prévus en amont et/ou en aval de ladite chaîne continue.

Selon un mode de réalisation préféré, les organes de préhension sont essentiellement constitués par une pince basculante reliée à une chaîne de liaison commune : plus spécialement, la pince basculante est essentiellement constituée par un étrier suspendu à la chaîne de liaison commune, et un système de mors monté sur ledit étrier de façon à pouvoir basculer autour d'un axe essentiellement horizontal, des premiers moyens de came étant en outre prévus, en amont et en aval du four-tunnel, pour faire pivoter ledit système de mors d'un angle sensiblement égal à 90°, et des seconds moyens de came étant également prévus pour actionner ledit système de mors.

Dans ce cas, l'axe du système de mors sera de préférence prolongé d'un côté de l'étrier, par un levier à galet pouvant coopérer avec une came extérieure fixe, et de l'autre côté dudit étrier, par un levier soumis à l'action d'un ressort à dépassement de point dur, de façon à disposer de deux positions angulaires stables orthogonales. En variante, le système de mors est adapté pour saisir extérieurement une extrémité d'un objet, par exemple le goulot d'un emballage, ou au contraire adapté pour saisir intérieurement une extrémité d'un objet, par le fond d'un emballage.

Il est par ailleurs intéressant que l'appareil comporte en outre des moyens d'insufflage capables d'insuffler un fluide gazeux entre l'objet et le manchon à rétreindre, dans une direction essentiellement parallèle à la direction de convoyage.

De préférence alors, les moyens d'insufflage sont intégrés aux organes de préhension des objets. Avantageusement dans ce cas, les mors de la pince basculante constituent en outre des organes d'insufflage, le fluide gazeux étant de préférence acheminé par l'axe du système de mors ; en particulier, l'axe du système de mors est prolongé de chaque côté de l'étrier de la pince basculante, jusqu'à pénétrer dans un caisson fixe associé de soufflage, par une fente à bavette dudit caisson.

D'autres variantes pourront naturellement être envisagées pour réaliser les organes de préhension, selon le type d'objets concernés : par exemple, ces organes seront essentiellement constitués par des organes à prise par contact direct, tels qu'aimants ou ventouses selon le type d'objet concerné, lesdits organes pouvant basculer autour d'un axe horizontal, ou encore essentiellement constitués par des organes à prise entre pointes, lesdits organes étant équipés d'un moyen de levage dans le cas où l'objet est saisi dans une position horizontale, ou pouvant basculer autour d'un axe horizontal dans le cas où l'objet est saisi dans une position verticale.

D'autres caractéristiques et avantages de l'invention apparaîtront plus clairement à la lumière de la description qui va suivre et des dessins annexés, concernant un mode de réalisation particulier de mise en oeuvre du procédé, ainsi qu'un appareil associé, en référence aux figures où :

- la figure 1 est une vue en plan illustrant un appareil conforme à l'invention, permettant d'effectuer dans un four-tunnel la rétraction d'un manchon sur un objet, lorsque cet objet est en position horizontale, et de mettre ainsi en oeuvre un procédé selon l'invention, les objets étant ici saisis au niveau de leur goulot par des pinces de préhension basculantes assurant seules le convoyage desdits objets dans le four-tunnel ;

- les figures 2 et 3 sont des coupes selon II-II et III-III de la figure 1, permettant de mieux distinguer l'organisation de la préhension des objets et les parois latérales du four-tunnel entre lesquelles passent les objets basculés en position horizontale, ainsi que la chaîne continue des pinces de préhension ;

- la figure 4 est un diagramme illustrant pour mémoire deux courbes typiques RT et RL représentatives des variations du pourcentage de rétreint (% R) en fonction de la température T (en °C) : ce diagramme déjà commenté plus haut illustre l'importance d'avoir une température à la fois précise, constante et homogène pour que la rétraction puisse s'effectuer dans des conditions optimales (le diagramme de la figure 4 ne sera donc pas commenté dans la description qui va suivre) ;

- les figures 5 et 6 sont des vues en plan et de côté, à échelle agrandie, d'une pince de préhension basculante ;

- la figure 7 est une coupe selon VII-VII de la figure 6, permettant de mieux distinguer l'agencement des mors de serrage de la pince ;

- la figure 8 est une coupe analogue à celle de la figure 7, mais illustrant une variante dans laquelle des moyens de soufflage sont également utilisés, ici intégrés dans la pince de préhension, afin s'insuffler de l'air entre l'objet et le manchon avant la rétraction de celui-ci ;

- la figure 9 est une vue de dessus de la pince de la figure 8, permettant de mieux distinguer l'organisation des canaux de soufflage prévus dans les mors de serrage ;

- les figures 10a et 10b sont des vues schématiques illustrant respectivement une chaîne continue de pinces se déplaçant dans un plan horizontal ou vertical (la saisie des objets se faisant en partie supérieure dans les deux cas) ;

- les figures 11a et 11b sont des vues schématiques illustrant le basculement de l'objet dans un plan vertical respectivement parallèle (avec deux sens possibles) ou perpendiculaire à la direction de convoyage des objets ;

- les figures 12a à 12d sont d'autres vues schématiques illustrant d'autres variantes de réalisation des organes de préhension, respectivement selon une saisie intérieure par pinces au niveau du fond creux de l'objet, une prise par aimants, une prise par ventouses, et une prise entre pointes (dans ce dernier cas, l'objet est ici saisi en position horizontale sur le convoyeur, de sorte que le "basculement" se ramène à une élévation de l'objet à la hauteur désirée).

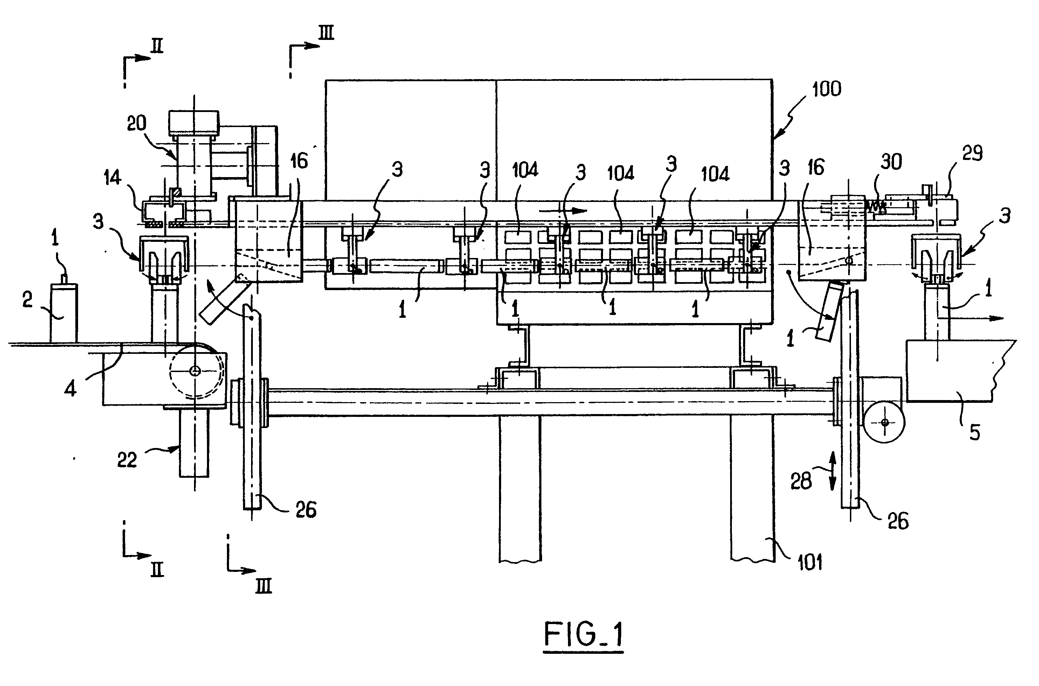

Sur les figures 1 à 3, on distingue un four-tunnel 100, ouvert à ses deux extrémités, qui repose sur une structure fixe 101. Ce four-tunnel comporte essentiellement deux caissons latéraux 102 sur la paroi intérieure desquels sont prévus des moyens de chauffage organisés le long de celle-ci, ces moyens étant ici réalisés sous la forme d'une succession d'éléments chauffants 104, de préférence constitués par des éléments à rayonnement à infra-rouge (il va de soi que ces moyens de chauffage pourraient être également réalisés sous forme d'éléments d'insufflage d'air chaud).

Le procédé de l'invention permet d'appliquer, par rétraction, sur un objet 1, un manchon thermorétractable 2 qui a été enfilé de façon lâche sur ledit objet. La rétraction du manchon thermorétractable 2 est effectuée dans le four-tunnel 100, lorsque l'objet 1 revêtu de son manchon 2 passe au niveau d'une zone prédéterminée dudit four tunnel.

Conformément à un aspect essentiel de l'invention, l'objet 1 muni de son manchon 2 est saisi par des moyens de préhension 3 pour être basculé dans une position essentiellement horizontale, c'est-à-dire sensiblement parallèlement à la direction de convoyage : de cette façon, la rétraction du manchon 2 sur ledit objet est effectuée dans cette position, progressivement de l'avant vers l'arrière, les moyens de préhension 3 assurant alors seuls le convoyage de l'objet avec son manchon dans le four-tunnel 100.

La notion de "position horizontale" doit être comprise comme une position dans laquelle le manchon enfilé sur l'objet et considéré comme une surface cylindrique présente une direction de génératrices s'étendant horizontalement, et ce quelle que soit la forme extérieure de l'objet concerne.

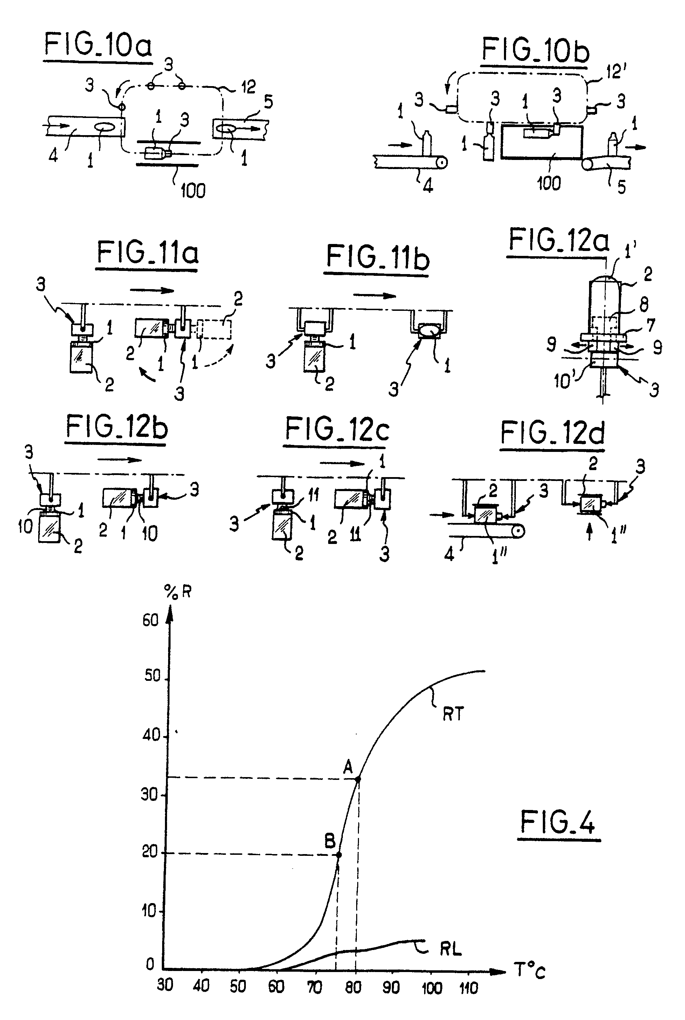

De même, les termes "avant" et "arrière" doivent être compris comme se référant respectivement aux zones amont et aval du manchon au regard de la direction de convoyage : en effet, l'objet peut être basculé dans un plan vertical sensiblement parallèle à la direction de convoyage, dans un sens ou dans l'autre (comme illustré à la figure 11a), auquel cas l'avant et l'arrière correspondent aux zones d'extrémité amont et aval du manchon, ou encore dans un plan vertical sensiblement perpendiculaire à la direction de convoyage comme illustré à la figure 11b), auquel cas l'avant et l'arrière correspondent aux zones des directrices amont et aval dudit manchon.

Ainsi, dans le cadre de cette invention, l'objet 1 sur lequel un manchon 2 a été enfilé de façon lâche arrive par un convoyeur 4 de type traditionnel en amont de l'entrée du four-tunnel 100, jusqu'à ce que l'objet soit saisi par les moyens de préhension 3, qui assurent alors seuls la fonction du convoyage de l'objet revêtu de son manchon dans le four-tunnel 100. Après le passage dans le four-tunnel, c'est-à-dire une fois le manchon 2 rétracté sur l'objet 1, le convoyage en aval du four-tunnel 100 est alors repris par un convoyeur traditionnel 5.

Il n'est donc plus question ici de convoyer les objets dans le four-tunnel par un convoyeur unique passant entre les parois latérales dudit four-tunnel, convoyeur unique sur lequel reposaient les objets revêtus de leur manchon.

La préhension des objets, organisée par une saisie dudit objet par l'une et/ou l'autre de ses extrémités permet ainsi non seulement de supprimer tout contact physique avec un convoyeur de support, mais aussi de déplacer l'objet revêtu de son manchon à un niveau prédéterminé dans le four-tunnel 100 : le convoyage se fait ainsi dans une strate située à une hauteur donnée, de direction parallèle à la direction de convoyage des objets, et correspondant à une zone dans laquelle le champ thermique peut être considéré comme homogène. Il va de soi que plus cette zone sera étroite, plus la température dans ladite zone sera constante. Le niveau précis de la strate concernée sera choisi en fonction de la température recherchée, principalement en fonction du film considéré.

Ce moyen permet ainsi de convoyer les objets revêtus de leur manchon dans le four-tunnel 100 dans un environnement dont la température est à la fois précise, constante, et homogène. Ceci permet donc d'assurer une rétraction parfaite du manchon sur l'objet, et ce pour des types très différents d'objets, ainsi que cela sera expliqué par la suite.

Il est important de comprendre qu'avec un convoyage traditionnel d'un objet dans un four-tunnel, ledit objet étant posé sur un convoyeur dans une position essentiellement verticale, on ne parvenait pas à éviter que le manchon soit baigné dans un champ thermique variant de haut en bas dans le four-tunnel, et de l'entrée vers la sortie dudit four-tunnel. Les explications fournies précédemment ont montré que ce défaut d'homogénéité du champ thermique avait pour effet d'une part d'initier d'abord la rétraction du manchon dans la partie supérieure de l'objet, et d'autre part en avant de celui-ci.

Au contraire, dans le cadre de l'invention, le basculement de l'objet en position horizontale, amenant ledit objet dans une strate de faible hauteur permet de supprimer radicalement les inconvénients des techniques traditionnelles : l'irrégularité du champ thermique dans le four-tunnel, du bas vers le haut de celui-ci, est alors beaucoup moins sensible dans la mesure où les objets se déplacent dans une strate de faible hauteur ; de plus, la rétraction concerne généralement la partie supérieure du manchon, qui est alors en avant de la partie inférieure de celui-ci, ce qui permet d'effectuer progressivement la rétraction du manchon de l'avant vers l'arrière. On parvient ainsi à éviter toute déformation de l'impression sur le manchon au niveau d'une face de celui-ci.

Le procédé de l'invention permet en outre de résoudre aisément les problèmes de rétraction pour certains objets dont la forme compliquait jusque-là considérablement la rétraction d'un manchon. En particulier, dans le cas d'emballages présentant une section à courbe concave sur une partie de leur hauteur, la technique classique de convoyage en position verticale dans le four-tunnel avait en général pour conséquence d'emprisonner de l'air dans la partie concave, tout ceci étant dû au fait que le film, en se rétractant, est d'abord en contact avec les parties convexes à l'emballage : les spécialistes ont ainsi constaté que l'air emprisonné nuisait souvent à une bonne rétraction sur la partie concave, de sorte que le film présentait alors un aspect frippé. Le mode de rétraction progressif de l'avant vers l'arrière, que l'on obtient en mettant en oeuvre le procédé de l'invention, permet au contraire de chasser progressivement l'air de l'intérieur du film au fur et à mesure de l'avancée de l'objet à l'intérieur du four-tunnel : on est alors assuré d'éviter la création de zones d'emprisonnement d'air.

Il convient également de citer le cas de certains objets, pour lesquels les spécialistes recherchaient la formation d'un rabat de recouvrement après rétraction du manchon thermorétractable : un exemple typique est celui des piles électriques cylindriques.

Les explications données plus haut ont montré que le convoyage traditionnel d'un tel objet ne permettait pas de résoudre ce problème de façon satisfaisante (impossibilité d'effectuer un rabat de recouvrement sous l'emballage lorsque celui-ci est convoyé dans une position verticale, et rétraction irrégulière dans le cas d'un convoyage horizontal de l'emballage reposant, directement ou indirectement, sur le convoyeur). Le procédé de l'invention permet de résoudre aisément cette difficulté, car le fait que le manchon dépasse des deux extrémités de l'objet ne nuit alors aucunement à la préhension dudit objet par ces extrémités, suivie de l'amenée de l'objet en position horizontale dans la strate prédéterminée du four-tunnel : grâce à un tel mode de préhension de l'objet, on évite tout contact physique du manchon thermorétractable avec une zone d'appui, ce qui non seulement favorise l'homogénéité de la rétraction du manchon, mais aussi permet aisément la formation d'un rabat de recouvrement sur l'une et ou l'autre extrémité dudit objet.

Le cas particulier d'un objet dont la saisie se fera au moyen d'organes de prise entre pointes montre que le terme "basculement" doit être compris dans un sens large dans le cadre de la présente invention : lorsque l'objet arrive en position debout, les moyens de préhension 3 effectuent véritablement un basculement de l'objet sur un angle d'environ 90°, et ce dans un sens ou dans l'autre, de façon que les moyens de préhension soient disposés en avant ou en arrière dudit objet lorsque celui-ci est dans une position essentiellement horizontale. Dans le cas particulier des objets qui sont saisis en position horizontale, le basculement se ramène alors à une simple élévation pour amener l'objet en position horizontale à une hauteur correspondant à la strate prédéterminée du four-tunnel.

Dans la pratique, l'objet 1 sera de préférence basculé avant son entrée dans le four-tunnel 100, de façon à passer dans la totalité dudit four-tunnel en position essentiellement horizontale. On évite ainsi tout risque de chauffage irrégulier du manchon thermorétractable à l'entrée du four-tunnel 100. A la sortie du four-tunnel 100, l'objet revêtu de son manchon thermorétracté sera de préférence à nouveau basculé dans une position essentiellement verticale, afin d'être convoyé par les moyens de convoyage traditionnels 5, après relâchement des moyens de préhension 3.

Il est ainsi possible de réaliser une chaîne automatique, à condition naturellement d'organiser convenablement la synchronisation entre l'amenée des objets et le défilement des moyens de préhension organisés en chaîne continue.

Sur les figures 1 à 3, on a représenté un objet 1 présentant un goulot 6, et les moyens de préhension 3 saisissent l'objet par son goulot, avant que ledit objet ne soit basculé dans une position essentiellement horizontale.

Avant de décrire plus en détail l'appareil illustré ici, il convient de mentionner que ce type de prise ne constitue naturellement qu'un exemple, ainsi que cela ressort des figures schématiques 12a à 12d. En effet :

- Figure 12a : il s'agit d'un objet 1', présentant inférieurement un épaulement annulaire 7 avec un fond creux 8 (de tels emballages se trouvent par exemple dans le domaine des pâtes dentrifice) ; dans ce cas, le procédé de l'invention permet aisément d'organiser une prise intérieure de l'objet 1', par son fond 8, au moyen d'un support 10' présentant des pinces 9 expansibles radialement, lesdites pinces pénétrant dans le fond creux 8, l'objet 1' revêtu de son manchon 2 étant alors ultérieurement basculé dans une position essentiellement horizontale.

- Figures 12b et 12c : les organes de préhension sont alors ici constitués par des organes à prise par contact direct, tels qu'un aimant 10 (figure 12b) ou une ventouse 11 (figure 12c), lesdits organes à prise par contact direct étant naturellement agencés pour pouvoir basculer autour d'un axe horizontal.

- Figure 12d : les organes de préhension 3 sont ici constitués par des organes à prise entre pointes, lesdits organes étant en outre équipés d'un moyen de levage (non représenté ici) dans le cas où l'objet 1″ est saisi dans une position horizontale : le cas typique de tels objets 1″ est celui illustré ici des piles électriques cylindriques, pour lesquelles on souhaite effectuer un ou deux rabats de recouvrement au niveau des extrémités de l'objet (il va de soi cependant que l'on pourrait également organiser la prise entre pointes de tels objets dans une position verticale, auquel cas les organes à prise entre pointes devront pouvoir basculer autour d'un axe horizontal, afin d'amener l'objet dans la position désirée).

Fondamentalement, l'appareil de mise en oeuvre du procédé de l'invention comporte des moyens de convoyage dans le four-tunnel 100 qui sont constitués par des moyens de préhension 3 capables de saisir l'objet 1 muni de son manchon 2, et de le faire basculer dans une position essentiellement horizontale, c'est-à-dire selon un plan sensiblement parallèle à la direction de convoyage.

En général, on choisira de basculer l'objet 1 dans un plan vertical sensiblement parallèle à la direction de convoyage, dans un sens tel que les moyens de préhension 3 soient disposés en avant dudit objet lorsque celui-ci est dans une position essentiellement horizontale, ou au contraire en arrière dudit objet. Ces deux possibilités sont illustrées schématiquement sur la figure 11a, le basculement vers l'arrière étant représenté en traits continus, et le basculement vers l'avant en tiretés. De préférence, en cas d'objets de forme conique, ou présentant une certaine conicité au voisinage des moyens de préhension, on s'arrangera pour que la section la plus faible pénètre par l'avant dans le four-tunnel.

En variante, on pourra choisir de basculer l'objet 1 dans un plan vertical sensiblement perpendiculaire à la direction de convoyage, de telle sorte que les moyens de préhension 3 soient disposés latéralement par rapport audit objet lorsque celui-ci est dans une position essentiellement horizontale : cette possibilité est illustrée schématiquement sur la figure 11b.

De préférence, l'appareil de l'invention comportera une succession d'organes de préhension 3 organisé selon une chaîne continue, comme illustré aux figures 1 à 3.

Avant de décrire plus précisément les organes constitutifs de l'appareil, et en particulier la structure des organes de préhension organisée en chaîne continue, il convient d'observer que la disposition illustrée aux figures 1 à 3 ne constitue qu'un exemple possible. Les figures schématiques 10a et 10b illustrent ainsi deux modes possibles d'agencement de la chaîne continue d'organes de préhension 3 :

- Figure 10a : la chaîne continue 12 d'organes de préhension 3 se déplace dans un plan sensiblement horizontal, avec un brin passant entre les parois latérales du four-tunnel 100 ; selon cette disposition, qui correspond d'ailleurs à celle des figures 1 à 3, un objet 1 revêtu de son manchon est amené par un convoyeur traditionnel 4 jusqu'au passage de la chaîne continue 12 d'organes de préhension, en un emplacement où un organe de préhension 3 saisit l'objet 1, et assure alors son convoyage dans le four-tunnel 100 après basculement dudit objet pour l'amener en position horizontale, en vue de la rétraction du manchon, après quoi l'objet 1 est à nouveau libéré au niveau d'un convoyeur aval traditionnel 5.

- Figure 10b : la chaîne continue 12' d'organes de préhension 3 se déplace ici dans un plan sensiblement vertical, avec un brin passant entre les parois latérales du four-tunnel 100 ; l'objet 1 amené par le convoyeur 4 arrive ainsi au niveau d'un organe de préhension 3 qui en assure alors le convoyage dans le four-tunnel, après basculement dudit objet pour l'amener en position horizontale, après quoi l'objet est à nouveau basculé en position debout, puis libéré pour être évacué par le convoyeur 5 (le brin correspondant au dégagement des organes de préhension 3 après libération de l'objet est ici le brin supérieur, mais il va de soi que l'on pourrait organiser également un dégagement sous le four-tunnel).

De toute façon, quel que soit le mode d'agencement de la chaîne continue d'organes de préhension 3, il conviendra de synchroniser l'avancement de ladite chaîne continue avec l'avancement des moyens de convoyage traditionnels 4, 5 prévus en amont et/ou en aval de celle-ci.

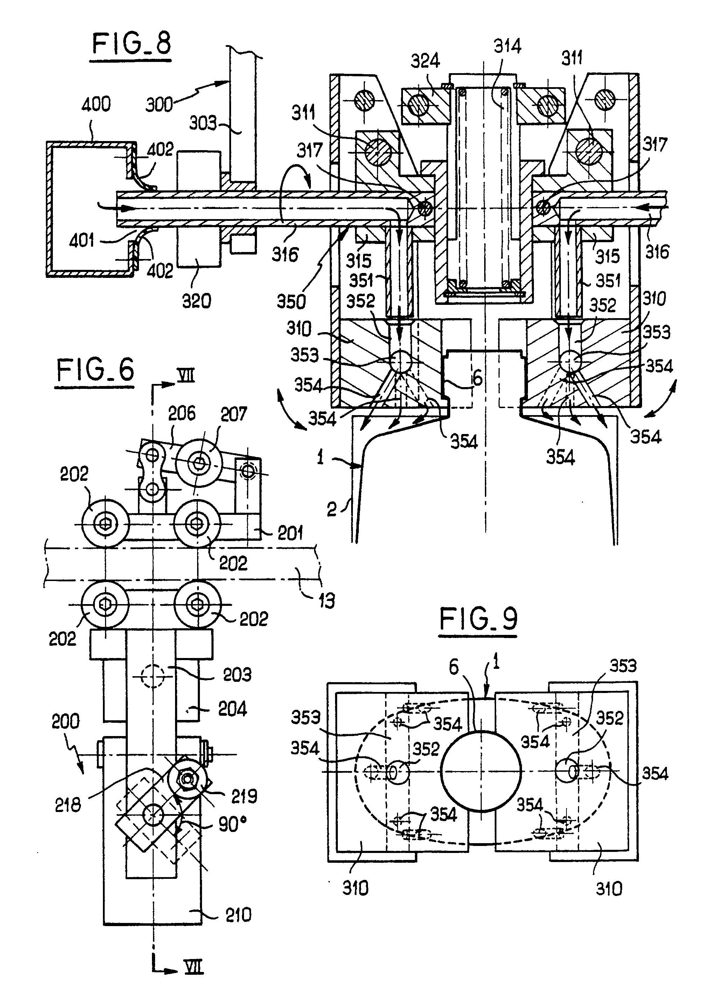

Avant de décrire plus en détail l'appareil illustré aux figures 1 à 3, on on va maintenant décrire plus précisément des modes de réalisation possible des organes de préhension 3. On se référera tout d'abord aux figures 5 à 7 illustrant une pince de préhension basculante, puis aux figures 8 et 9 illustrant une autre variante dans laquelle des moyens de soufflage sont également utilisés, plus spécialement intégrés dans la pince de préhension, afin d'insuffler de l'air entre l'objet et le manchon avant la rétraction de celui-ci.

La pince basculante 200 illustrée aux figures 5 à 7 est essentiellement constituée par un étrier 203 suspendu à la chaîne de liaison commune 12, et un système de mors 210 monté sur ledit étrier de façon à pouvoir basculer autour d'un axe essentiellement horizontal 216, des premiers moyens de came 16 étant en outre prévus, en amont et en aval du four-tunnel, pour faire pivoter ledit système de mors d'un angle sensiblement égal à 90°, et des seconds moyens de came 15 étant également prévus pour actionner ledit système de mors.

En l'espèce, la pince basculante 200 n'est pas directement suspendue à la chaîne de liaison commune 12, mais comporte un chariot 201 roulant par l'intermédiaire de galets 202 sur une glissière fixe 13 définissant le chemin de roulement des pinces basculantes 200. La glissière 13 est portée par un capotage supérieur 14 relié à la structure fixe de l'appareil : de cette façon, le poids de la pince basculante 200 et de l'objet qu'elle porte est supporté par la glissière 13, aucun effort vertical n'étant ainsi transmis à la chaîne de liaison 12, dont la seule fonction est de relier la succession de pinces basculantes 200 le long du chemin de roulement.

Les pinces basculantes 200 comportent une tige centrale d'actionnement 205 montée coulissante dans un support 204 solidaire de l'étrier 203. L'extrémité supérieure de la tige d'actionnement 205 est reliée à un levier 206 monté oscillant sur le chariot 201, ledit levier portant un galet 207 pouvant coopérer avec une came fixe 15 servant à l'actionnement de la tige 205, en vue de l'ouverture des mors de serrage 210. L'extrémité inférieure de la tige 205 constitue ainsi un poussoir d'actionnement pouvant coopérer avec un organe 209 relié aux mors de serrage 210. Il convient de noter qu'un ressort de rappel 213 assure ici la remontée de la tige d'actionnement 205, en vue d'un bon contact avec la came fixe 15, lorsque celle-ci coopère avec le galet 207. L'organe 209 coulisse télescopiquement dans un corps 223 solidaire d'éléments 215 supportant les mors de serrage 210. Une bride 224 assure la liaison entre l'organe 209 et les mors 210 par l'intermédiaire de maillons 212, disposés au-dessus des axes 211 de pivotement desdits mors. Chacun des mors de serrage 210 pivote ainsi autour d'un axe 211 porté par l'élément 215 associé, auquel est accouplé un axe 216 par l'intermédiaire d'une goupille 217. L'axe 216 est essentiellement horizontal, et constitue l'axe de basculement du système de mors 210. Par ailleurs, l'axe 216 du système de mors 210 est prolongé, d'un côté de l'étrier 203, par un levier 218 portant un galet 219 ; le levier à galet peut coopérer avec une came extérieure fixe 16 servant à la commande du basculement du système de mors 210. De l'autre côté de l'étrier 203, l'axe 216 est prolongé par un levier 220 soumis à l'action d'un ressort à dépassement de point dur 221, dont l'autre extrémité est solidaire d'un pion 222 saillant de l'étrier 203, de façon à disposer de deux positions angulaires stables orthogonales : l'une de ces positions, illustrée en trait continu sur la figure 6, correspond à une position de préhension ou de relâchement des objets pour le système de mors 210 ; l'autre position, illustrée en tiretés sur la figure 6, correspond à une position basculée, dans laquelle l'objet saisi est convoyé dans une position essentiellement horizontale. On notera par ailleurs la présence d'un ressort 214, assurant le rappel des mors 210 en position de serrage.

Si l'on revient maintenant à la figure 1, il est aisé de comprendre le fonctionnement de la pince basculante qui vient d'être décrite : dès que la pince arrive au niveau de la came 16 prévue en amont du four-tunnel 100, le galet 219 initie la rotation de l'axe 216, et, le dépassement du point dur du ressort 221, il y a un basculement vers l'autre position stable, dans laquelle l'objet est alors supporté dans une position horizontale. La pince basculante et l'objet qu'elle supporte restent ainsi dans cette position pendant la traversée du four-tunnel 100, en vue de la rétraction du manchon thermorétractable sur l'objet, après quoi la pince basculante rencontre une autre came fixe 16 prévue en aval du four-tunnel 100, laquelle came commande le basculement inverse du système, ce qui ramène l'objet à sa position verticale initiale.

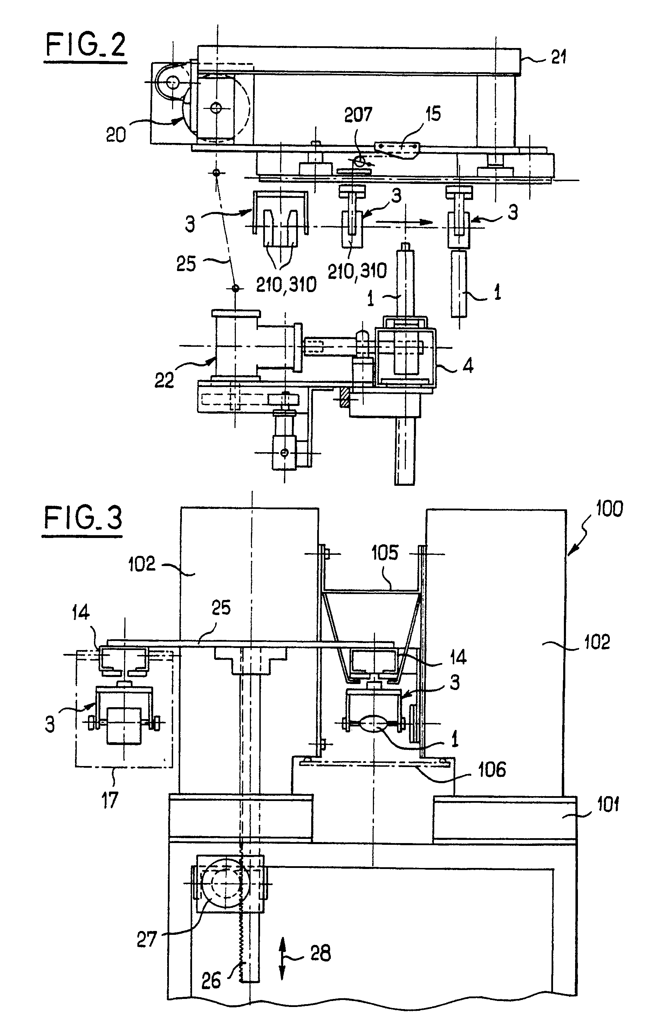

A chacune des extrémités avant et arrière de la chaîne continue de pinces de préhension basculantes, est prévue une came fixe 15 commandant l'ouverture des mors de serrage 210 (cette came 15 est plus spécialement visible sur la coupe de la figure 2) : si l'on se réfère à la figure 2, pour laquelle le sens de défilement de la chaîne de pinces basculantes correspond à la direction allant de la gauche vers la droite, on constate que les pinces basculantes constituant les organes de préhension 3 arrivent en position mors serrés (qui est assurée par les deux ressorts de rappel 213 et 214), jusqu'à la rencontre de la came fixe 15 qui provoque l'ouverture des mors 210 pour la saisie de l'objet, ces mors se refermant aussitôt après le passage de la came fixe 15. Le même agencement se retrouve naturellement pour l'extrémité aval de la chaîne continue d'organes de préhension, afin de relâcher l'objet sur lequel le manchon a été rétracté.

Les figures 1 à 3 permettent par ailleurs de distinguer d'autres équipements de l'appareil.

Sur la figure 2, on distingue des moyens motoréducteurs 20 assurant l'entraînement de la chaîne continue d'organes de préhension 3, lesdits moyens étant montés sur une structure 21. On constate également la présence de moyens motorisés d'entraînement 22, associés au convoyeur 4. La ligne 23 rappelle symboliquement la liaison fonctionnelle entre les moyens 20 et 22, assurant une synchronisation entre l'entraînement respectif de la chaîne continue d'organes de préhension 3 et du convoyeur 4, afin que les objets 1 se présentent convenablement par rapport aux pinces associées.

La figure 3 permet de distinguer l'extrémité 25 de l'élément supportant la structure 14, et donc les organes de préhension 3 par l'intermédiaire de leur chariot associé : il est intéressant de pouvoir régler en hauteur la chaîne continue d'organes de préhension, ce qui est ici assuré de manière particulièrement simple grâce à la présence de deux colonnes 26, dont l'extrémité inférieure se présente sous la forme d'une crémaillère coopérant avec un pignon d'actionnement 27 associé. On notera également la présence d'une voûte de protection thermique des moyens mécaniques entre les parois latérales 102 du four-tunnel 100, agencée ici sous la forme d'une voûte 105 de section trapézoïdale. Il est également prévu un capotage 106 de protection thermique, pour fermer inférieurement l'enceinte du four-tunnel 100 ceci permet au passage de rappeler qu'il n'y a aucun convoyeur en partie inférieure du four-tunnel, contrairement aux appareils connus. La voûte 105 et le capotage 106 permettent ainsi d'isoler une enceinte bien définie, dans laquelle passent les organes de préhension 3 supportant les objets avec leur manchon à rétreindre. On notera également la présence ici d'un capotage 17 associé au brin de retour de la chaîne continue d'organes de préhension.

Sur la figure 1, on distingue les deux colonnes 26 de support précitées, la flèche 28 associée rappelant le réglage de la position verticale. On distingue également, en aval du four-tunnel 100, une pièce d'extrémité 29 sur laquelle passe la chaîne continue d'organes de préhension, avec un tendeur de chaîne, illustré ici par un ressort hélicoïdal 30.

On va maintenant décrire une variante dans laquelle des moyens de soufflage sont également utilisés, ces moyens étant ici intégrés dans les moyens de préhension, afin d'insuffler de l'air entre l'objet et le manchon avant la rétraction de celui-ci.

En effet, conformément à une variante intéressante du procédé de l'invention, il est prévu qu'après le basculement de l'objet 1, on insuffle un fluide gazeux entre l'objet 1 et le manchon 2 à rétreindre, et ce dans une direction essentiellement parallèle à la direction de convoyage, pour gonfler le manchon 2 et le maintenir hors de contact avec l'objet à revêtir, la température dudit fluide gazeux étant de préférence choisie pour réaliser, avant la rétraction proprement dite, un équilibrage progressif des températures des faces intérieure et extérieure dudit manchon au seuil de ramollissement du film constitutif.

Une telle variante est surtout intéressante dans le cas d'objets de formes non cylindriques, tels que des objets de formes coniques ou analogues.

Selon un mode de réalisation particulièrement avantageux, l'insufflage de fluide gazeux est effectué par les moyens de préhension 3 eux-mêmes, de façon à organiser un flux léchant l'objet 1 audelà desdits moyens de préhension. Ceci permet ainsi de simplifier considérablement l'appareil mettant en oeuvre un tel procédé, en plus de réaliser d'un soufflage très efficace, dans la mesure où il permet de diriger des flux d'air très près de l'extrémité de l'objet qui est saisi par ces moyens de préhension.

Les figures 8 et 9 illustrent ainsi de tels moyens d'insufflage 350 qui sont en l'espèce intégrés aux organes de préhension 3 des objets. Sur la figure 8, on distingue ainsi une pince basculante 300 dont les mors 310 constituent des organes d'insufflage de fluide gazeux. On ne distingue ici que la partie inférieure de la pince basculante, laquelle comporte un grand nombre d'organes identiques à ceux de la pince basculante 200 précédemment décrite : de ce fait, les organes identiques ou homologues seront simplement affectés des mêmes références augmentées de cent, et ne seront donc pas décrits à nouveau.

La différence essentielle par rapport à la pince basculante précédemment décrite réside dans la structure des axes de basculement 316 et des mors de serrage 310. Les axes 316 sont en effet ici creux, et communiquent, par un tronçon de tube souple 351, avec un perçage central 352 du mors de serrage 310 associé. Ce perçage 352 communique avec un évidement transversal 353, duquel partent un certain nombre de conduits de soufflage 354. La vue de dessus de la figure 9 permet ainsi de distinguer un ensemble de cinq conduits de soufflage 354, dont l'agencement permet d'organiser un insufflage extrêmement favorable, car effectué très près de la surface supérieure de l'objet, ce qui permet de réaliser un effet de ballonnement très favorable avant que la rétraction proprement dite du manchon n'intervienne. Les moyens d'amenée du fluide gazeux sont ici réalisés sous la forme d'un caisson fixe de soufflage 400, dans lequel pénètre une extrémité de l'axe 316, par une fente 401 dudit caisson qui est fermé, de part et d'autre de l'extrémité de l'axe 316, par une double bavette souple 402 (ce montage rappelle celui utilisé classiquement pour les vérins sans tige).

Il convient d'observer qu'un tel mode de réalisation permet d'effectuer l'insufflage désiré sans aucunement nuire aux possibilités de mouvement de basculement de la pince 300 ainsi réalisée.

L'invention n'est pas limitée au mode de réalisation qui vient d'être décrit, mais englobe au contraire toute variante reprenant, avec des moyens équivalents, les caractéristiques essentielles figurant aux revendications.

En particulier, la description de nombreux moyens équivalents qui a été donnée ci-dessus, permet aisément de comprendre que d'autres moyens équivalents sont également possibles pour constituer les moyens de préhension permettant de basculer l'objet muni de son manchon dans une position essentiellement horizontale, et de convoyer cet objet dans une telle position dans le four-tunnel.

## Revendications

1. Procédé pour appliquer, par rétraction, un manchon thermorétractable sur un objet à revêtir, dans lequel l'objet sur lequel un manchon a été enfilé de façon lâche est convoyé dans un four-tunnel ouvert à ses deux extrémités et équipé de moyens de chauffage organisés le long de ses parois latérales, caractérisé par le fait que l'objet (1) muni de son manchon (2) est saisi par des moyens de préhension (3) pour être basculé dans une position essentiellement horizontale, c'est-à-dire sensiblement parallèlement à la direction de convoyage, de façon que la rétraction dudit manchon sur ledit objet soit effectuée dans cette position, progressivement de l'avant vers l'arrière, lesdits moyens de préhension assurant alors seuls le convoyage de l'objet avec son manchon dans le four-tunnel (100).

2. Procédé selon la revendication 1, caractérisé par le fait que l'objet (1) est basculé avant son entrée dans le four-tunnel (100), de façon à passer dans la totalité dudit four-tunnel en position essentiellement horizontale.

3. Procédé selon la revendication 1 ou 2, caractérisé par le fait que l'objet (1) est à nouveau basculé dans une position essentiellement verticale à la sortie du four-tunnel (100), afin d'être convoyé par des moyens de convoyage traditionnels (5) après relâchement des moyens de préhension (3).

4. Procédé selon l'une des revendications 1 à 3, dans lequel l'objet est un emballage présentant un goulot, caractérisé par le fait que l'objet (1) est saisi par son goulot (6) avant d'être basculé dans une position essentiellement horizontale.

5. Procédé selon l'une des revendications 1 à 3, dans lequel l'objet est un emballage présentant un fond dont la forme permet une prise extérieure ou intérieure, caractérisé par le fait que l'objet (1′) est saisi par son fond (8) avant d'être basculé dans une position essentiellement horizontale.

6. Procédé selon l'une des revendications 1 à 3, dans lequel l'objet présente deux extrémités permettant une prise entre pointes, par exemple une pile électrique, caractérisé par le fait que l'objet (1″) est saisi par ses extrémités dans une position essentiellement horizontale, puis élevé à la hauteur désirée.

7. Procédé selon l'une des revendications 1 à 5, caractérisé par le fait que l'objet (1) est basculé dans un plan vertical sensiblement parallèle à la direction de convoyage, dans un sens tel que les moyens de préhension (3) soient disposés en avant dudit objet lorsque celui-ci est dans une position essentiellement horizontale.

8. Procédé selon l'une des revendications 1 à 5, caractérisé par le fait que l'objet (1) est basculé dans un plan vertical sensiblement parallèle à la direction de convoyage, dans un sens tel que les moyens de préhension (3) soient disposés en arrière dudit objet lorsque celui-ci est dans une position essentiellement horizontale.

9. Procédé selon l'une des revendications 1 à 5, caractérisé par le fait que l'objet (1) est basculé dans un plan vertical sensiblement perpendiculaire à la direction de convoyage, de telle sorte que les moyens de préhension (3) soient disposés latéralement par rapport audit objet lorsque celui-ci est dans une position essentiellement horizontale.

10. Procédé selon l'une des revendications 1 à 9, caractérisé par le fait qu'après le basculement de l'objet (1), on insuffle un fluide gazeux entre l'objet (1) et la manchon (2) à rétreindre, pour gonfler le manchon (2) et le maintenir hors de contact avec l'objet à revêtir, la température dudit fluide gazeux étant choisie pour réaliser, avant la rétraction proprement dite, un équilibrage progressif des températures des faces intérieure et extérieure dudit manchon au seuil de ramollissement du film constitutif.

11. Procédé selon la revendication 10, caractérisé par le fait que l'insufflage de fluide gazeux est effectué par les moyens de préhension (3), de façon à organiser un flux léchant l'objet (1) au-delà desdits moyens de préhension.

12. Appareil pour la mise en oeuvre du procédé selon l'une des revendications 1 à 11, comportant des moyens pour convoyer des objets (1) munis d'un manchon (2) dans un four-tunnel (100) ouvert à ses deux extrémités et équipé de moyens de chauffage (104) organisés le long de ses parois latérales (102), caractérisé par le fait que les moyens de convoyage dans le four-tunnel sont constitués par des moyens de préhension (3) capables de saisir l'objet (1) muni de son manchon (2), et de le faire basculer dans une position essentiellement horizontale, c'est-à-dire sensiblement parallèlement à la direction de convoyage.

13. Appareil selon la revendication 12, caractérisé par le fait qu'il comporte une succession d'organes de préhension (3) organisée selon une chaîne continue (12, 12′).

14. Appareil selon la revendication 13, caractérisé par le fait que la chaîne continue (12) d'organes de préhension (3) se déplace dans un plan sensiblement horizontal, avec un brin passant entre les parois latérales (102) du four-tunnel (100).

15. Appareil selon la revendication 13, caractérisé par le fait que la chaîne continue (12') d'organes de préhension (3) se déplace dans un plan sensiblement vertical, avec un brin passant entre les parois latérales (102) du four-tunnel (100).

16. Appareil selon l'une des revendications 13 à 15, caractérisé par le fait que l'avancement de la chaîne continue (12, 12') d'organes de préhension (3) est synchronisé avec l'avancement de moyens de convoyage traditionnels (4, 5) prévus en amont et/ou en aval de ladite chaîne continue.

17. Appareil selon l'une des revendications 13 à 16, caractérisé par le fait que les organes de préhension (3) sont essentiellement constitués par une pince basculante (200, 300) reliée à une chaîne de liaison commune (12).

18. Appareil selon la revendication 17, caractérisé par le fait que la pince basculante (200) est essentiellement constituée par un étrier (203) suspendu à la chaîne de liaison commune (12), et un système de mors (210) monté sur ledit étrier de façon à pouvoir basculer autour d'un axe essentiellement horizontal (216), des premiers moyens de came (16) étant en outre prévus, en amont et en aval du four-tunnel, pour faire pivoter ledit système de mors d'un angle sensiblement égal à 90°, et des seconds moyens de came (15) étant également prévus pour actionner ledit système de mors.

19. Appareil selon la revendication 18, caractérisé par le fait que l'axe (216) du système de mors (210) est prolongé d'un côté de l'étrier (203), par un levier à galet (218, 219) pouvant coopérer avec une came extérieure fixe (16), et de l'autre côté dudit étrier, par un levier (230) soumis à l'action d'un ressort à dépassement de point dur (221), de façon à disposer de deux positions angulaires stables orthogonales.

20. Appareil selon la revendication 19, caractérisé par le fait que le système de mors (210) est adapté pour saisir extérieurement une extrémité d'un objet (1), par exemple le goulot (6) d'un emballage.

21. Appareil selon la revendication 19, caractérisé par le fait que le système de mors (9) est adapté pour saisir intérieurement une extrémité d'un objet (1'), par le fond (8) d'un emballage.

22. Appareil selon l'une des revendications 13 à 21, caractérisé par le fait qu'il comporte en outre des moyens d'insufflage (350) capables d'insuffler un fluide gazeux entre l'objet (1) et le manchon (2) à rétreindre, dans une direction essentiellement parallèle à la direction de convoyage.

23. Appareil selon la revendications 22, caractérisé par le fait que les moyens d'insufflage (350) sont intégrés aux organes de préhension (3) des objets.

24. Appareil selon les revendications 17 et 22, caractérisé par le fait que les mors (310) de la pince basculante (300) constituent en outre des organes d'insufflage, le fluide gazeux étant de préférence acheminé par l'axe (316) du système de mors.

25. Appareil selon la revendication 24, caractérisé par le fait que l'axe (316) du système de mors (310) est prolongé de chaque côté de l'étrier (303) de la pince basculante (300), jusqu'à pénétrer dans un caisson fixe associé de soufflage (400), par une fente à bavette (401, 402) dudit caisson.

26. Appareil selon l'une des revendications 13 à 16, caractérisé par le fait que les organes de préhension (3) sont essentiellement constitués par des organes à prise par contact direct, tels qu'aimants (10) ou ventouses (11) selon le type d'objet (1) concerné, lesdits organes pouvant basculer autour d'un axe horizontal.

27. Appareil selon l'une des revendications 13 à 16, caractérisé par le fait que les organes de préhension (3) sont essentiellement constitués par des organes à prise entre pointes, lesdits organes étant équipés d'un moyen de levage dans le cas où l'objet (1") est saisi dans une position horizontale, ou pouvant basculer autour d'un axe horizontal dans le cas où l'objet (1") est saisi dans une position verticale.

FIG_1

EP 0 397 580 A1

FIG.2

FIG.3

FIG.5

FIG.7

EP 0 397 580 A1

FIG_8

FIG_6

FIG_9

## FIG.10a

## FIG.10b

## FIG.11a

## FIG.11b

## FIG.12a

## FIG.12b

## FIG.12c

## FIG.12d

## FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 346 129  (OWENS)<br>--- | | B 65 B  53/02<br>B 29 C  63/42 |
| A | DE-A-2 610 051  (OWENS)<br>----- | | |

| DOMAINES TECHNIQUES RECHERCHES (Int. Cl.5) |
|---|
| B 65 B<br>B 29 C |

Le présent rapport a été établi pour toutes les revendications

| Lieu de la recherche | Date d'achèvement de la recherche | Examinateur |
|---|---|---|
| LA HAYE | 12-06-1990 | COULOMB J.C. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P0402)